# EUROPÄISCHE PATENTSCHRIFT

(11) **EP 3 429 877 B1**
(45) Veröffentlichungstag und Bekanntmachung des Hinweises auf die Patenterteilung: **05.05.2021**
(21) Anmeldenummer: 17710537.6
(22) Anmeldetag: 13.03.2017
(51) Int. Cl.: B60J 7/20

(54) **VERDECKKASTENKLAPPE**
FOLDING TOP COMPARTMENT LID
COUVERCLE DE LOGEMENT DE CAPOTE

(30) Priorität: 16.03.2016 DE 102016204350
(43) Veröffentlichungstag der Anmeldung: 23.01.2019
(73) Patentinhaber: Bayerische Motoren Werke Aktiengesellschaft, 80809 München (DE)
(72) Erfinder: GEISSLER, Andreas, 81371 Muenchen (DE)
(86) Internationale Anmeldenummer: PCT/EP2017/055865
(87) Internationale Veröffentlichungsnummer: WO 2017/157866

(56) Entgegenhaltungen:
- DE-A1- 10 039 683
- DE-A1-102009 040 609
- DE-T2- 69 701 655
- US-A- 3 053 567

## Beschreibung

Die vorliegende Erfindung betrifft eine Verdeckkastenklappe für ein Cabrioletfahrzeug.

Eine bekannte Verdeckkastenklappe verschließt eine Verdeckkastenöffnung eines Cabrioletfahrzeugs sowohl in dem Zustand eines geöffneten Verdecks als auch in dem Zustand eines geschlossenen Verdecks, wobei zum Einklappen bzw. Ausklappen des Verdecks die Verdeckkastenklappe geöffnet wird. Üblicherweise ist die Verdeckkastenklappe Bestandteil eines so genannten Karosserierohbaus, der mit der Fahrzeugkarosserie einen Lackiervorgang durchläuft. Die Verdeckkastenklappe ist dabei ein zweischaliges Karosseriebauteil mit einer Außenschale und einer Innenschale, die der Verdeckkastenklappe eine hinreichende Steifigkeit verleiht. An einem Bereich einer Außenseite der Verdeckkastenklappe, der im geschlossenen Zustand des Verdecks als Hutablage dient und damit Bestandteil des Innenraums ist, kann eine Kunststoffblende, die gegebenenfalls zusätzlich mit Leder bezogen ist, vorgesehen sein. Die Innenschale und die Außenschale sind üblicherweise aus einem metallischen Werkstoff, bspw. Stahl, gefertigt. Aus der DE 20 2005 002 887 U1 ist zudem ein zweischaliger Verdeckkastendeckel bekannt, der aus einer Außenschale und einer Innenschale besteht, die aus einem glasfaserverstärkten Duroplast hergestellt sind.

Bei der zweischaligen Verdeckkastenklappe sind Scharniere zur gelenkigen Verbindung mit der Fahrzeugkarosserie an der Innenschale geeignet befestigt.

Ferner ist es bekannt, eine Verdeckkastenklappe aus einem mehrschichtigen Verbundbauteil auszubilden, wie in der DE 10 2005 036 380 A1 und in der DE 10 2009 040 609 A1 gezeigt ist.

Bei einem derartigen Verbundbauteil ist wiederum eine Anbindung eines verdeckkastenklappenseitigen Scharnierteils schwierig
Eine Verdeckkastenklappe mit einem selbsttragenden Montageteil und einer daran montierten Zierleiste mit Zusatzfunktionen ist aus der DE 697 01 655 T2 bekannt.

Es ist daher die Aufgabe der vorliegenden Erfindung, eine Verdeckkastenklappe zum Verschließen einer Verdeckkastenöffnung eines Cabrioletfahrzeugs zu schaffen, wobei die Verdeckkastenklappe hinreichend steif und leicht ist und wobei eine Scharnieranbindung einfach ausgeführt werden kann.

Diese Aufgabe wird durch eine Verdeckkastenklappe gelöst, die die Merkmale von Patentanspruch 1 aufweist. Vorteilhafte Weiterbildungen sind in den abhängigen Patentansprüchen genannt.

Eine Verdeckkastenklappe gemäß der vorliegenden Erfindung zum Verschließen einer Verdeckkastenöffnung eines Cabrioletfahrzeugs besteht zumindest aus einem Rohbauteil und einem selbsttragenden Montageteil. Das selbsttragende Montageteil schließt sich derart an das Rohbauteil an, dass das Rohbauteil alleine einen Bereich der Verdeckkastenöffnung verschließt und das Montageteil alleine einen Bereich der Verdeckkastenöffnung verschließt.

Mit anderen Worten überlappen sich das Rohbauteil und das Montageteil höchstens in geringem Maße und verschließen damit jeweils nur einen Teil der Verdeckkastenöffnung.

Selbsttragend kann in diesem Zusammenhang bedeuten, dass es der Beanspruchung durch eine Person, die beispielsweise bei geöffnetem Verdeck auf dem Verdeckkastendeckel sitzt, widersteht.

Gemäß der Erfindung kann damit ein Rohbauanteil der Verdeckkastenklappe geeignet verringert werden, ohne dass eine Steifigkeit der Verdeckkastenklappe insgesamt reduziert wird, und das Rohbauteil kann über eine bekannte Scharnieranbindung auf bekannte Weise mit der Karosserie verbunden werden. Darüber hinaus kann das Montageteil bereits mit einer gewünschten Oberfläche versehen sein, ohne dass ein zusätzliches, eine Oberfläche der Verdeckkastenklappe bildendes Bauteil an das Rohbauteil montiert werden muss. Mit anderen Worten ist das eine Oberfläche bildende Bauteil selbst ein tragendes Bauteil der Verdeckkastenklappe, sodass ein Rohbauteil der Verdeckkastenklappe kleiner und leichter und damit auch die Verdeckkastenklappe insgesamt leichter gestaltet werden kann. Durch eine Verkleinerung des Rohbauteils kann ferner zusätzlicher Bauraum im Bereich des Montageteils geschaffen werden.

Das Montageteil kann vorteilhaft nach einem Lackiervorgang des Rohbauteils an dem Rohbauteil montierbar sein.

Gemäß der vorliegenden Erfindung ist bei der Verdeckkastenklappe das Rohbauteil zumindest zweischalig mit einer inneren, d.h. einer unteren, Schale und einer äußeren, d.h. einer oberen, Schale, ausgebildet. Die innere Schale und die äußere Schale bilden einen Hohlraum oder mehrere Hohlräume dazwischen aus.

Durch die Zweischaligkeit kann eine hinreichende Steifigkeit des Rohbauteils erzielt werden.

Ferner kann an dem Rohbauteil, insbesondere an der äußeren Schale, ein Scharnierteil angebracht sein.

Die innere Schale und die äußere Schale können aus einem Kunststoff, insbesondere einem faserverstärktem Kunststoff, oder einem metallischen Werkstoff, insbesondere Stahl oder Aluminium oder einer Aluminiumlegierung, ausgebildet sein.

Die äußere Schale kann dabei Bestandteil einer Fahrzeugaußenhaut sein. Insbesondere kann die äußere Schale dabei sichtbarer Bestandteil der Fahrzeugaußenhaut sein, wenn das Verdeck geschlossen ist.

Die innere Schale und die äußere Schale können bspw. durch Kleben, Schweißen oder eine Schraubverbindung miteinander verbunden sein.

Das Montageteil ist erfindungsgemäß aus einem Verbundwerkstoff ausgebildet.

Die Ausbildung aus einem Verbundwerkstoff ermöglicht es das Montageteil einstückig auszuführen. Ferner kann das Montageteil bei hinreichender Steifigkeit ein geringes Gewicht aufweisen.

Dabei ist das Montageteil vorteilhaft mehrlagig, insbesondere nach Art eines Sandwiches, ausgebildet.

Hierdurch kann eine Steifigkeit des Montageteils bei geringem Gewicht weiter erhöht sein.

Gemäß einer bevorzugten Weiterbildung der Verdeckkastenklappe kann dabei das Montageteil eine innere Traglage, eine äußere Traglage und eine zwischen der inneren Traglage und der äußeren Traglage angeordnete Abstandslage aufweisen. Die Abstandslage kann bspw. aus einem geschäumten Werkstoff oder einem Werkstoff mit einer Wabenstruktur ausgebildet sein.

Bevorzugt weist das Montageteil eine äußere, d.h. eine obere, Dekorlage auf.

Die Dekorlage ist bevorzugt in einem Bereich der Verdeckkastenklappe ausgebildet, der sich bei geschlossenem Verdeck innerhalb des Fahrzeuginnenraums befindet, d.h. unterhalb des Verdecks.

Ein derartiger Bereich bildet bevorzugt eine so genannte Hutablage bei geschlossenem Verdeck. Mit anderen Worten bildet das Montageteil bevorzugt eine Hutablage bzw. einen Hutablagenbereich.

Das Montageteil kann gemäß einer bevorzugten Weiterbildung im Wesentlichen einen Bereich einer Verdeckkastenöffnung verschließen, der sich bei einem geschlossenen Verdeck innerhalb bzw. unterhalb des Verdecks, d.h. innerhalb des Fahrzeuginnenraumes, befindet.

Somit kann das Rohbauteil geeignet als Fahrzeugaußenhautbauteil ausgebildet sein und das Montageteil kann geeignet als Hutablage bzw. Bestandteil des Innenraums des Fahrzeugs ausgebildet sein.

Gemäß einer bevorzugten Weiterbildung der erfindungsgemäßen Verdeckkastenklappe hat das Rohbauteil einen Hauptabschnitt, der sich in Fahrzeugquerrichtung erstreckt, und zwei Schenkelabschnitte, die sich von seitlichen Endabschnitten des Hauptabschnitts im Wesentlichen in Fahrzeuglängsrichtung - bei geschlossener Verdeckkastenklappe - erstrecken.

Mit anderen Worten ist das Rohbauteil in Draufsicht im Wesentlichen U-förmig ausgebildet, wobei das Montageteil zwischen dem Hauptabschnitt und den zwei Schenkelabschnitten angeordnet ist.

Erfindungsgemäß ist das Montageteil an dem Rohbauteil starr montiert.

Mit anderen Worten ist das Montageteil fest, d.h. im Wesentlichen unbeweglich, an dem Rohbauteil befestigt. Es besteht keine gelenkige Verbindung zwischen dem Montageteil und dem Rohbauteil.

Bespielweise ist das Montageteil über eine Bolzenverbindung, z. B. eine Schraubverbindung oder eine Nietverbindung, und / oder eine stoffschlüssige Verbindung, z. B. mittels Kleben oder Schweißen, mit dem Rohbauteil verbunden.

Bevorzugt ist die Verdeckkastenklappe an einem Cabrioletfahrzeug montierbar, das zusätzlich zur Verdeckkastenklappe eine Heckklappe zum Öffnen und Schließen eines Kofferraums bzw. Laderaums aufweist. Verdeckkastenklappe und Heckklappe können dabei unmittelbar aneinander grenzen.

Die vorstehend genannten Weiterbildungen der Erfindung können soweit möglich und sinnvoll beliebig miteinander kombiniert werden.

Es folgt eine Kurzbeschreibung der Figuren.
- Fig. 1: ist eine schematische Perspektivansicht einer Verdeckkastenklappe gemäß einem Ausführungsbeispiel der vorliegenden Erfindung.
- Fig. 2: ist eine schematische Draufsicht einer Unterseite der Verdeckkastenklappe gemäß dem Ausführungsbeispiel der vorliegenden Erfindung.
- Fig. 3: ist eine schematische geschnittene Seitenansicht der Verdeckkastenklappe gemäß dem Ausführungsbeispiel der vorliegenden Erfindung.
- Fig. 4: ist eine weitere schematische geschnittene Seitenansicht der Verdeckkastenklappe gemäß dem Ausführungsbeispiel der vorliegenden Erfindung.

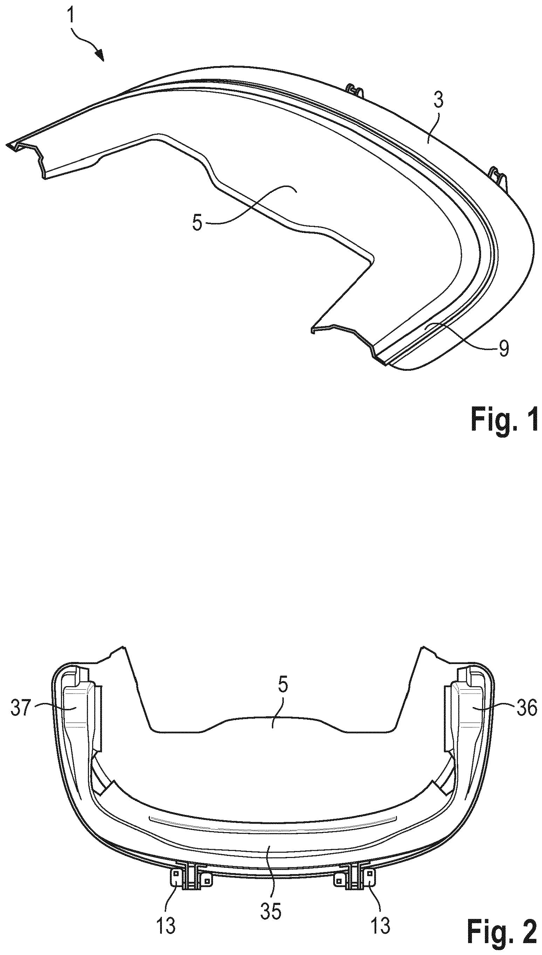

Es folgt eine detaillierte Beschreibung eines Ausführungsbeispiels der vorliegenden Erfindung unter Bezugnahme auf Fign. 1 bis 4.

Eine wie in Figuren 1 und 2 gezeigte Verdeckkastenklappe 1 eines Cabrioletfahrzeugs gemäß dem Ausführungsbeispiel der vorliegenden Erfindung besteht im Wesentlichen aus einem U-förmig ausgebildeten Rohbauteil 3 und einem daran montierten Montageteil 5. Das Montageteil 5 ist dabei in dem Bereich zwischen einem Basisteil 35 und Schenkeln 36 und 37 des Rohbauteils 3 an dem Rohbauteil montiert. Das Rohbauteil 3 und das Montageteil 5 überlappen sich dabei lediglich in einem kleinen Bereich. Im Bereich eines Übergangs zwischen dem Rohbauteil 3 und dem Montageteil 5 ist eine Blende 9 angebracht. Das Montageteil 5 bildet eine Hutablage des Fahrzeugs, die sich hinter der einzigen Sitzreihe oder bei einem Fahrzeug mit mehreren Sitzreihen hinter der letzten Sitzreihe des Fahrzeugs befindet. Das Rohbauteil 3 bildet ein Außenhautbauteil der Fahrzeugkarosserie.

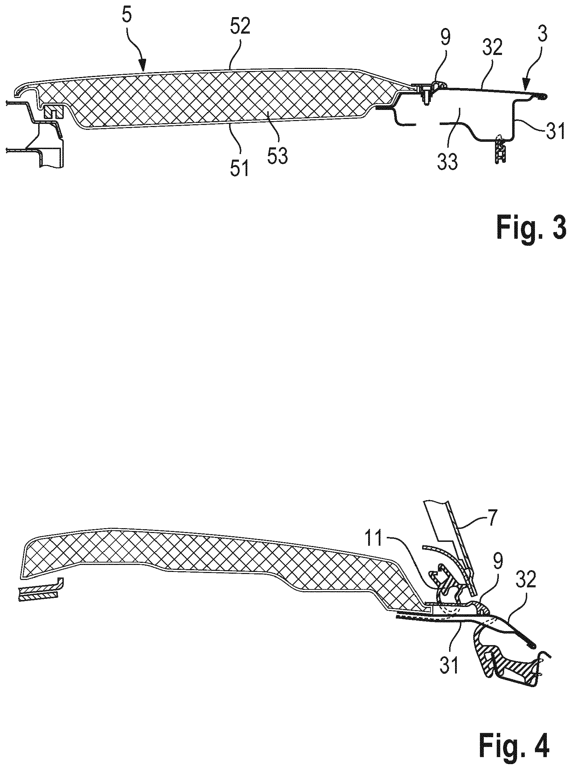

Wie aus den Schnittansichten der Fig. 3 und 4 der Verdeckkastenklappe 1 ersichtlich ist, besteht das Rohbauteil 3 im Wesentlichen aus einer unteren, d.h. einer inneren, Schale 31 und einer oberen, d.h. einer äußeren, Schale 32. Die äußere Schale 32 bildet dabei die Karosserieaußenhaut und ist bei geschlossenem Verdeck von außen sichtbar. Die beiden Schalen 31 und 32 sind durch Schweißen oder Verschrauben oder Verkleben miteinander verbunden, wobei ein Hohlraum 33 zwischen der unteren Schale 31 und der oberen Schale 32 ausgebildet ist. Diese zweischalige Bauweise ermöglicht eine hinreichende Steifigkeit des Rohbauteils 3. An dem Rohbauteil 3, insbesondere der unteren Schale 31 sind zusätzlich Scharnierteile 13 auf bekannte Weise angebracht.

Das Montageteil 5 ist ein nach Sandwich-Bauart hergestelltes Bauteil, das aus einer unteren Lage 51, einer oberen Lage 52 und einer dazwischen angeordneten Abstandslage 53 besteht. Die einzelnen Lagen 51, 52, 53 sind dabei flächig und stoffschlüssig miteinander verbunden. Die untere Lage 51 und die obere Lage 52 können dabei aus einem faserverstärkten Kunststoff hergestellt sein. Die Abstandslage 53 ist bevorzugt aus einem geschäumten Werkstoff oder einem wabenförmigen Werkstoff ausgebildet, so dass sie hinreichend leicht ist. Die Abstandslage 53 hat die Funktion, einen Abstand zwischen der unteren Lage 51 und der oberen Lage 52 herzustellen, die die eigentliche tragende und steifigkeitsverleihende Aufgabe haben.

Wie in Figuren 3 und 4 gezeigt ist, überlappt das Montageteil 5 nur geringfügig mit dem Rohbauteil 3, sodass das Montageteil 5 alleine einen größeren Bereich der Verdeckkastenöffnung verschließt und ebenso das Rohbauteil 3 alleine einen größeren Bereich der Verdeckkastenöffnung verschließt.

Durch die Eigensteifigkeit und selbsttragende Eigenschaft des Montageteils 5 und die Verbindung mit dem U-förmigen Rohbauteil 3 ist die Verdeckkastenklappe 1 im Bereich des Montageteils 5 hinreichend steif, sodass hierauf ggf. Personen sitzen können.

In Fig. 4 ist zudem ein kleiner Teil des geschlossenen Verdecks 7 gezeigt, dessen unterer Rand im Verbindungsbereich zwischen dem Rohbauteil 3 und dem Montageteil 5 an dem Rohbauteil 3 bzw. an einer daran angebrachten Blende 9 über eine Dichtung 11 abdichten kann.

Bei einem Herstellen des Cabrioletfahrzeugs mit der Verdeckkastenklappe 1 wird zunächst das Rohbauteil 3 über die Scharniere 13 an der Fahrzeugkarosserie befestigt und durchläuft dann zusammen mit der gesamten Fahrzeugkarosserie einen Lackiervorgang, insbesondere einen Tauchlackiervorgang. Nach dem Lackierprozess wird das bereits vorbereitete mit einer geeigneten Oberfläche versehene Montageteil 5 an dem lackierten Rohbauteil 3 mittels Schrauben oder dergleichen montiert.

Insgesamt bilden das Rohbauteil 3 und das Montageteil 5 eine hinreichend steife Verdeckkastenklappe 1, die zudem ein geringes Gewicht aufweist. Die Scharnieranbindung kann auf die gleiche Art und Weise wie bei einer bekannten Verdeckkkastenklappe, die lediglich aus einem Rohbauteil als tragendes Bauteil besteht, erfolgen. Es kann eine zusätzliche Blende im Hutablagenbereich weggelassen werden, da das Montageteil diese Funktion übernimmt. Anders ausgedrückt bildet das Montageteil eine Blende und Hutablage, die zudem eine selbsttragende Funktion hat, so dass das Rohbauteil insgesamt kleiner ausgeführt sein kann.

## Patentansprüche

1. Verdeckkastenklappe (1) zum Verschließen einer Verdeckkastenöffnung eines Cabrioletfahrzeugs, wobei die Verdeckkastenklappe (1) zumindest aus einem Rohbauteil (3) und einem selbsttragenden Montageteil (5) besteht, das sich an das Rohbauteil (3) derart anschließt, dass das Rohbauteil (3) alleine einen Bereich der Verdeckkastenöffnung verschließt und das Montageteil (5) alleine einen Bereich der Verdeckkastenöffnung verschließt, wobei das Montageteil (5) an dem Rohbauteil (3) starr montiert ist,
**dadurch gekennzeichnet, dass**
das Rohbauteil (3) zumindest zweischalig mit einer inneren Schale (31) und einer äußeren Schale (32) ausgebildet ist, die einen oder mehrere Hohlräume (33) dazwischen ausbilden, und wobei das Montageteil (5) aus einem Verbundwerkstoff ausgebildet ist.

2. Verdeckkastenklappe nach Patentanspruch 1, wobei die Schalen (31, 32) aus einem Kunststoff, insbesondere einem faserverstärktem Kunststoff, oder einem metallischen Werkstoff, insbesondere Stahl oder Aluminium oder einer Aluminiumlegierung, ausgebildet sind.

3. Verdeckkastenklappe nach Patentanspruch 1 oder 2, wobei das Montageteil (5) mehrlagig ausgebildet ist.

4. Verdeckkastenklappe nach Patentanspruch 3, wobei das Montageteil (5) eine innere Traglage (51), eine äußere Traglage (52) und eine zwischen der inneren Traglage und der äußeren Traglage angeordnete Abstandslage (53), insbesondere aus einem geschäumten Werkstoff oder in Form einer Wabenstruktur, aufweist.

5. Verdeckkastenklappe nach Patentanspruch 3 oder 4, wobei das Montageteil (5) eine äußere Deckorlage aufweist.

6. Verdeckkastenklappe nach einem der Patentansprüche 1 bis 5, wobei das Montageteil (5) im Wesentlichen einen Bereich einer Verdeckkastenöffnung verschließt, der sich bei einem geschlossenen Verdeck innerhalb des Verdecks befindet.

7. Verdeckkastenklappe nach einem der Patentansprüche 1 bis 6, wobei das Rohbauteil (5) im Wesentlichen einen Bereich einer Verdeckkastenöffnung verschließt, der sich bei geschlossenem Verdeck (7) außerhalb des Verdecks (7) befindet.

8. Verdeckkastenklappe nach einem der Patentansprüche 1 bis 7, wobei das Rohbauteil (5) einen Hauptabschnitt (35), der sich in Fahrzeugquerrichtung erstreckt, und zwei Schenkelabschnitte (36, 37), die sich von seitlichen Endabschnitten des Hauptabschnitts (35) im Wesentlichen in Fahrzeuglängsrichtung erstrecken, aufweist, wobei das Montageteil (5) zwischen dem Hauptabschnitt (35) und den zwei Schenkelabschnitten (36, 37) angeordnet ist.

## Claims

1. Folding top compartment lid (1) for closing a folding top compartment opening of a convertible vehicle, wherein the folding top compartment lid (1) consists at least of a bodyshell component (3) and a self-supporting mounted part (5) which is connected to the bodyshell component (3) in such a way that the bodyshell component (3) on its own closes a region of the folding top compartment opening and the mounted part (5) on its own closes a region of the folding top compartment opening, wherein the mounted part (5) is rigidly mounted on the bodyshell component (3),
**characterized in that**
the bodyshell component (3) is formed with at least two shells, an inner shell (31) and an outer shell (32), which form one or more cavities (33) therebetween, and wherein the mounted part (5) is formed from a composite material.

2. Folding top compartment lid according to Patent Claim 1, wherein the shells (31, 32) are formed from a plastic, in particular a fibre-reinforced plastic, or a metallic material, in particular steel or aluminium or an aluminium alloy.

3. Folding top compartment lid according to Patent Claim 1 or 2, wherein the mounted part (5) is formed in multiple layers.

4. Folding top compartment lid according to Patent Claim 3, wherein the mounted part (5) comprises an inner supporting layer (51), an outer supporting layer (52) and a spacer layer (53) which is arranged between the inner supporting layer and the outer supporting layer and is in particular composed of a foamed material or is in the form of a honeycomb structure.

5. Folding top compartment lid according to Patent Claim 3 or 4, wherein the mounted part (5) has an outer decorative layer.

6. Folding top compartment lid according to one of Patent Claims 1 to 5, wherein the mounted part (5) substantially closes a region of a folding top compartment opening which is located inside the folding top when said folding top is closed.

7. Folding top compartment lid according to one of Patent Claims 1 to 6, wherein the bodyshell component (5) substantially closes a region of a folding top compartment opening which is located outside the folding top (7) when said folding top (7) is closed.

8. Folding top compartment lid according to one of Patent Claims 1 to 7, wherein the bodyshell component (5) has a main portion (35), which extends in the transverse direction of the vehicle, and two limb portions (36, 37), which extend from lateral end portions of the main portion (35) substantially in the longitudinal direction of the vehicle, wherein the mounted part (5) is arranged between the main portion (35) and the two limb portions (36, 37).

## Revendications

1. Volet de compartiment de capote (1) destiné à fermer une ouverture de compartiment de capote d'un véhicule cabriolet, le volet de compartiment de toit (1) comprenant au moins une partie coque (3) et une partie de montage autoportante (5) qui est contiguë à la partie coque (3) de telle manière que la partie coque (3) ferme seule une zone de l'ouverture de compartiment de capote et la partie de montage (5) ferme seule une zone de l'ouverture de compartiment de capote, la partie de montage (5) étant montée rigidement sur la partie coque (3),
**caractérisé en ce que**
la partie coque (3) est conçue en au moins deux coques comprenant une coque intérieure (31) et une coque extérieure (32) qui forment entre elles une ou plusieurs cavités (33), et la partie de montage (5) étant formée à partir d'un matériau composite.

2. Volet de compartiment de capote selon la revendication 1, les coques (31, 32) étant en matière synthétique, en particulier en matière synthétique renforcée de fibres, ou en matière métallique, en particulier en acier ou en aluminium ou en alliage d'aluminium.

3. Volet de compartiment de capote selon la revendication 1 ou 2, la partie de montage (5) étant formée en plusieurs couches.

4. Volet de compartiment de capote selon la revendication 3, la partie de montage (5) comportant une couche de support intérieure (51), une couche de support extérieure (52) et une couche d'espacement (53) disposée entre la couche de support intérieure et la couche de support extérieure, en particulier en matériau expansé ou sous la forme d'une structure en nid d'abeille.

5. Volet de compartiment de capote selon la revendication 3 ou 4, la partie de montage (5) comportant une couche de recouvrement extérieure.

6. Volet de compartiment de capote selon l'une des revendications 1 à 5, la partie de montage (5) fermant sensiblement une zone d'une ouverture de compartiment de capote qui est située à l'intérieur de la capote lorsque la capote est fermée.

7. Volet de compartiment de capote selon l'une des revendications 1 à 6, la partie coque (5) fermant sensiblement une zone d'une ouverture de compartiment de capote qui est située à l'extérieur de la capote (7) lorsque la capote (7) est fermée.

8. Volet de compartiment de capote selon l'une des revendications 1 à 7, la partie coque (5) comportant une portion principale (35), qui s'étend dans la direction transversale du véhicule, et deux portions de branche (36, 37) qui s'étendent depuis des portions d'extrémité latérales de la portion principale (35) sensiblement dans la direction longitudinale du véhicule, la partie de montage (5) étant disposée entre la portion principale (35) et les deux portions de branche (36, 37).
